# EUROPEAN PATENT SPECIFICATION

(11) **EP 1 894 285 B1**
(45) Date of publication and mention of the grant of the patent: **29.08.2018**
(21) Application number: 06772790.9
(22) Date of filing: 07.06.2006
(51) Int. Cl.: F21L 4/00, F21V 29/503, H01M 6/50, H01M 10/615, H01M 10/623, H01M 10/6554, H01M 10/667, F21V 29/15, F21Y 101/00, H01M 10/658

(54) **A flashlight with improved battery life**
Eine Taschenlampe mit verbesserter Batterielaufzeit
Une lampe de poche avec une durée de vie de la batterie améliorée

(30) Priority: 07.06.2005 US 687999 P
(43) Date of publication of application: 05.03.2008
(73) Proprietor: Underwater Kinetics, Poway, CA 92064 (US)
(72) Inventor: UKE, Alan, K., Del Mar, California (US)
(74) Representative: Kossak, Sabine
(86) International application number: PCT/US2006/022613
(87) International publication number: WO 2006/133432

(56) References cited:
- DE-A1- 2 747 596
- DE-U1-202004 018 627
- US-A- 5 343 368
- US-A- 5 953 207
- US-A- 5 987 890
- US-A- 6 104 611
- US-A- 6 109 039
- US-A1- 2002 090 546
- US-A1- 2003 170 515
- US-A1- 2004 095 777
- US-A1- 2004 132 503
- US-B1- 6 611 673
- ENERTRON INC: "Heat Pipe Selection" INTERNET CITATION, [Online] 12 April 2001 (2001-04-12), pages 1-6, XP002521762 Retrieved from the Internet: URL:http://www.enertron-inc.com/enertron-r esources/library.php> [retrieved on 2009-03-04]

## Description

### TECHNICAL FIELD

This invention concerns devices that employ one or more batteries as the primary or secondary power supply to energize electrical components of the device. Specifically, the invention concerns devices capable of transferring waste heat generated by an energized electrical component of the device to the battery(ies).

### BACKGROUND OF THE INVENTION

### 1. Introduction.

The following description includes information that may be useful in understanding the present invention. It is not an admission that any such information is prior art, or relevant, to the presently claimed inventions, or that any publication specifically or implicitly referenced is prior art.

### 2. Background.

The present invention relates to the field of battery-powered devices, especially to devices such as battery-powered flashlights, music players, cameras, and portable personal computers and telecommunications devices, a vast number of which are known. In such devices, the electrical component(s) that provide the desired functionality to the user are in electrical communication with a power supply whose energy is provided by one or more batteries. For example, conventional flashlights include a light source in electrical communication with one or more batteries, and an electrical switch disposed in the electrical circuit between the light source and power supply is used to control energizing of the light source using energy stored in the batteries. The same general configuration is used to power the electrical components of any battery-operated device.

Sometimes battery-powered devices are used in environments where battery performance is sub-optimal, meaning that one or more parameters used to measure battery performance differs as compared to when the device is operated under "normal" operating conditions. Of course, what constitutes "normal" operating conditions for a given device will depend on the device itself and its intended application. Also, many battery-powered devices contain electrical components that, when energized, generate substantial amounts of heat in the course of their operation. Examples of such components include light sources and Microprocessors, among others. In general, heat generated from the operation of such electrical components is simply waste heat that is not specifically harnessed for use in the device, and indeed in many cases represents a problem that is addressed through the inclusion of components that serve to dissipate waste heat to the environment, away from the device. The instant invention concerns battery-powered devices that include components
capable of conducting at least a portion of what would otherwise be waste heat generated by an energy consumption unit to the device's power supply, particularly to the battery or batteries used to supply electrical energy to the energy consumption unit(s) of the device. The heat-conducting portion of such devices is in addition to the electrical circuitry used to energize the device's energy consumption unit(s).

US 2002 / 0090546 A1 generally describes a method and an apparatus for improving battery performance by transferring waste heat generated from heat generating components to the battery that, when brought to a high temperature, attains better performance according to temperature characteristics of the battery.

### 3. Definitions.

Before describing the instant invention in detail, several terms used in the context of the present invention will be defined. In addition to these terms, others are defined elsewhere in the specification, as necessary. Unless otherwise expressly defined herein, terms of art used in this specification will have their art-recosnized meanings.
The term "electrically conductive material" or "electrical conductor" refers to any suitable material, or composite of different materials, that conducts electricity and can be adapted for use in the context of this invention. Examples of such materials include metals such as copper, brass, bronze, aluminum, a steel, and the like.

An "energy consumption unit" is a component of a device that consumes energy provided by the device's power supply to perform a desired or intended function, but excludes heater elements (i.e., a component the primary function of which is to produce heat). Representative examples of energy consumption units include light sources (or the light source assemblies that include one or more light sources) in flashlights, microprocessors, data storage devices (e.g., hard drives). etc.
With reference to the battery housing or body of a device according to the invention (i.e., a flashlight), the term "front end" refers to the end to which the bezel or head is attached, and "rear end" refers to the end opposite the bezel or head end.
Two or more components are in "heat conducting relation" when heat can be transferred from the hotter component to the cooler component. Preferably, a heat conductor provides for heat conduction between two or more device components.
A "heat conductive material" or "heat conductor" refers to any suitable material, or composite of different materials, that transfers heat by conduction, i.e., by molecular agitation within the material without movement of the material as a whole. Thus, a "heat conductor" is any component designed to conduct heat from one location in a device to another location in the device, for example, from and energy consumption unit to one or more batteries of the device's power supply. As is known, heat flows from hot to cold, such that if one end of a metal rod is at a higher temperature, then energy will be transferred down the rod toward the colder end because the higher speed particles in the hotter end will collide with the slower, cooler ones, transferring energy (i.e., heat) to the slower molecules, causing them to speed up. The rate of heat transfer is dependent on both the temperature gradient between the hot and cold components and the thermal conductivity of the material(s) used as the heat conductor. Metals tend to exhibit high thermal conductivity, as the mobile electrons used to in electrical conductance, participate in heat transfer. The following are representative metallic examples of heat conductors, ranked from highest to lowest thermal conductivity: silver, copper, gold, aluminum, brass, platinum, iron, steel, and lead. Non-metallic heat conductors include diamond. Heat conductors comprise heat conductive material(s), and are fashioned into the particular shape(s) required based on the particular application. Portions of a heat conductor may also be thermally insulated.

A "housing" refers to a structure that houses the energy consumption unit, heat conductor, and power supply of a device according to the invention. A "battery housing" is a component of a battery-based power supply that houses the battery(ies). Such housings also typically include contacts or leads that allow the power supply to be connected to electrical circuitry in the device for which the power supply can provide energy. In some embodiments, other components, e.g., temperature sensors, etc., may also be included in a power supply.

A "light source" refers to a component that generates light when electrically energized, e.g., by a battery. Such light sources include, for example, light emitting diodes (LEDs), light bulbs, and the like.

A "light source assembly" refers to an assembly that includes a fitting for a light source or an integrated light source. In the context of a flashlight, such assemblies are usually configured to retain the light source in the flashlight. Such an assembly can include components such as a socket or fitting for the light source(s), one or more light sources, a reflector to direct light out of the flashlight, one or more lenses to focus light emitted by the light source(s) and, if a reflector is included in the assembly, reflected by the reflector before passing through the lens(es), a filter and/or protective cover, and electrical contacts to electrically couple the light source to a power supply, or to electrical components that couple the power supply to the light source. In the context of LED-based light sources, a heat sink is also generally included as part of the assembly. In the context of this invention, it is understood that any such heat sink is distinct from the heat conductor and power supply of the device, although in preferred embodiments the heat sink of a light source assembly will be disposed in heat conducting relation with the heat conductor such that thermal energy present in the heat sink may traverse the heat conductor and flow to the power supply where at least some of it may be absorbed, for example, by the power supply's batteries.

The term "longitudinal axis" or "long axis" refers to a line that extends in perpendicular fashion between two parallel planes, one of which lies in a cross-section of the front end the housing and the other of which lies in a cross-section of the rear end of the housing.

A "parameter" refers to an observable property of something. For example, one "parameter" related to battery performance is battery life or half-life, or the time period (or 50% of the period) over which the battery delivers its rated energy output. The value of a parameter at a particular time can be measured qualitatively or quantitatively.

A "patentable" composition, process, machine, or article of manufacture according to the invention means that the subject matter satisfies all statutory requirements for patentability at the time the analysis is performed. For example, with regard to novelty, non-obviousness, or the like, if later investigation reveals that one or more claims encompass one or more embodiments that would negate novelty, non-obviousness, *etc.,* the claim(s), being limited by definition to "patentable" embodiments, specifically exclude the unpatentable embodiment(s). Also, the claims appended hereto are to be interpreted both to provide the broadest reasonable scope, as well as to preserve their validity. Furthermore, if one or more of the statutory requirements for patentability are amended or if the standards change for assessing whether a particular statutory requirement for patentability is satisfied from the time this application is filed or issues as a patent to a time the validity of one or more of the appended claims is questioned, the claims are to be interpreted in a way that (1) preserves their validity and (2) provides the broadest reasonable interpretation under the circumstances.

In the context of a battery, a "primary" battery refers to a non-rechargeable battery, while a "secondary" battery refers to a rechargeable battery. In the context of a power supply, a "primary" power supply refers to the first, default, or primary energy source, whereas a "secondary" power supply refers a back-up power supply.
A "reflector" in a conventional light source assembly of a battery-powered flashlight refers to a component(s) for reflecting light from the light source(s) forward, or out of, the light source assembly and thus out of flashlight.

### SUMMARY OF THE INVENTION

It is an object of this invention to provide devices, namely flashlights that are capable of transferring waste heat generated by the operation of an energy consumption unit to the device's battery- based power supply through the use of a thermal conductor. It has been discovered that such heat transfer and the resulting battery heating can improve operation of the power supply, for example, by extending battery life, as may be assessed, for example, by measuring voltage output over time, as well increasing battery efficiency when the device is used in low temperature settings. Transfer of at least a portion of the waste from an energy consumption unit to the power supply also serves to reduce the temperature of the energy consumption unit, which can result in extended operational life of the particular component. Accordingly, other objects of the invention concern methods of using such devices to warm batteries and improve battery performance (for example, to increase energy output, to extend the period of time over which a battery's rated energy output can be sustained, etc.) and to improve the efficiency of an energy consumption unit the use of a device according to the invention, for example, bv reducing the operating temperature of an energy consumption unit. Thus, in one aspect, the invention concerns battery-powered device, namely flashlight, that comprise a housing, an energy consumption unit associated with the housing and in electrical communication with a power supply disposed in the housing, wherein the power supply comprises least one battery, and a heat conductor disposed in the housing in heat conducting relation with the energy consumption unit and the power supply such that during operation of the energy consumption unit at least a portion of the heat generated by the energy consumption unit is conducted bv the heat conductor to the battery.

In certain preferred embodiment the energy consumption unit comprises one or more light sources, such as a light bulb and an LED. Preferably, the heat conductor comprises metal. Representative examples include silver, copper, gold, aluminum, iron, platinum, and alloys of any of the foregoing. The heat
Conductor may be a solid, hollow, or filled with fluid, preferably a heat conducting fluid.

Other embodiments of this aspect of the invention concern devices over which a thermal insulating layer has been applied. For example, when a device according to the invention is expected to be used in a cold environment, a user may place the device in an insulating sleeve or the like. Such sleeves can be prepared from any suitable material, for example. foam. neoprene, paper, that provides an insulating function.
An aspect of the invention relates to methods of warming the battery, or
batteries, that constitute the power supply of a battery-operate device. Such methods utilize a device according to the invention. These methods are particularly useful when a device according to the invention is used in cold environments, particularly in environments where the ambient temperature is well below the normal operating temperature range of the batteries used to provide energy to the device.
A related aspect concerns methods for extending battery life. Here, the period over
which a battery can sustain its rated electrical output can be extended by transferring waste heat from an energy consumption unit to the battery, particularly if the battery, when warmed, is within its normal operating range.
Yet another aspect of the invention concerns methods for improving the efficiency of
an energy consumption unit. In this aspect, drawing waste heat away from the energy consumption unit and transferring it to a battery in the device's power supply improve the efficiency of an energy consumption unit. A heat conductor is operably disposed between the energy consumption unit and the power supply such that a portion of the waste heat generated by the energy consumption unit is transferred to the battery(ies). In the context of LED-based light systems (e.g., flashlights that use one or more LEDs as the light source), reducing the light source assembly's temperature during operation improves efficiency. When coupled with electronics and controls capable of regulating light output (e.g., to achieve a specific level of light output under a particular set of conditions), a reduction in LED temperature may allow a reduction in power consumption to achieve the desired level of light output, further optimizing the device's power usage.

### BRIEF DESCRIPTION OF THE DRAWINGS

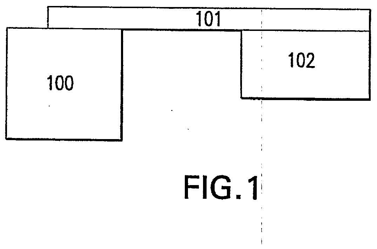

Figure 1 shows functional block diagram depicting an energy consumption unit (100) in heat conducting relation with a heat conductor (101), which, in turn, is in heat conducting relation with a power supply (102) containing batteries (not shown). Not shown is the electrical circuit that connects the power supply (102) to the energy consumption unit.

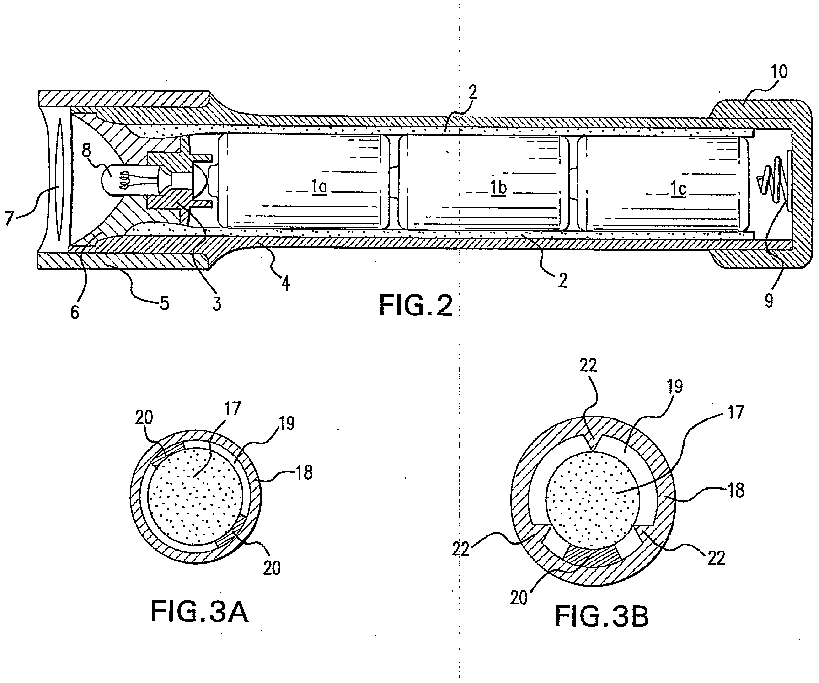

Figure 2 shows a cross section through the long axis of a representative flashlight embodiment of the invention. In the depicted embodiment, the power supply comprises three batteries (la-c) disposed in heat conducting relation with a heat conductor (2) and a light source assembly that includes a socket (3) for a light bulb (8) and a metallized reflector (6) that also serves as a heat sink. The proximal end of the heat conductor (2) is in heat conducting relation with the reflector (6) such that a portion of the heat generated during operation of the light bulb (8) can be transferred to the batteries (1). In this embodiment, the flashlight body or housing (4) is preferably made of a thermally insulating material, durable material or composite. The light bulb is turned on and off by rotation of rotatable base (10) in relation to the housing (4), which brings the electrically conductive spring (9) into contact with the negative terminal of the battery (1c). The remainder of the electrical circuitry needed to complete the light bulb energizing circuit is not depicted. Also depicted is a removable head (5) attached to the housing (4). The head also contains a lens (7) for focusing light emitted from the light bulb.
Figure 3 depicts two cross sections, A and B, taken perpendicular to the long axis of the flashlight body (18). Battery (17) is housed in the body and contacts each of two heat conductors (20). The battery does not touch the body (18), with air gap (19) providing insulation. Panel B shows another configuration where battery (17) contacts heat conductor (2) and each of three spines (22) protruding into the cavity of the body.

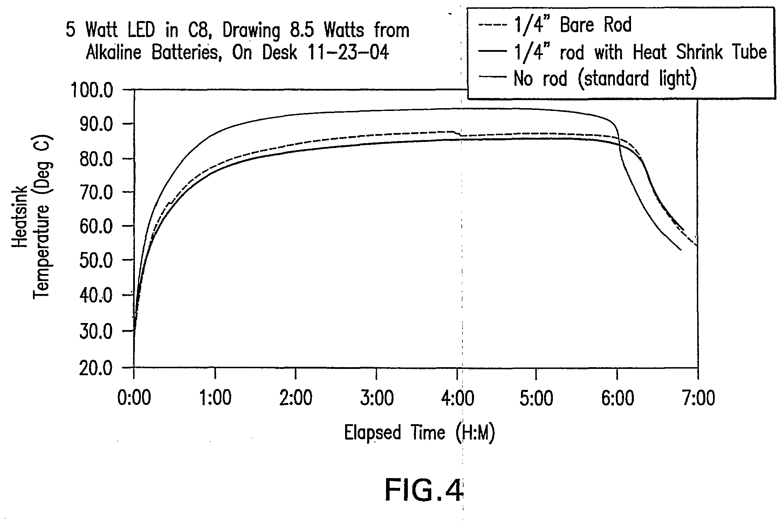

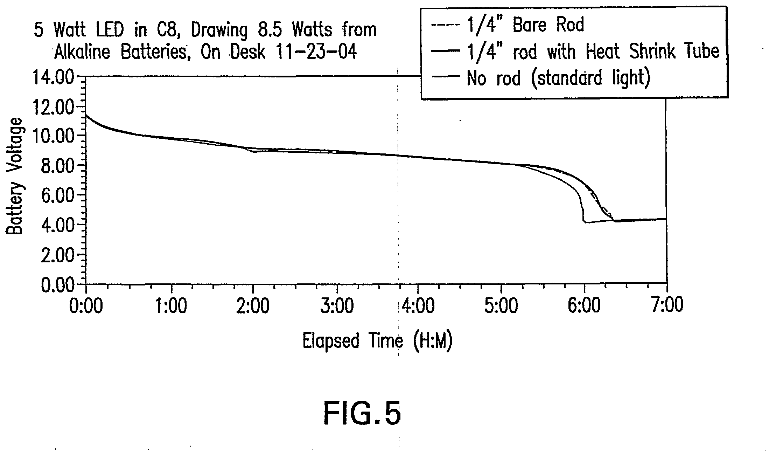

Figures 4 and 5 depict the results of bench-top experiments that demonstrate improved battery efficiency through the heat conductor-mediated transfer of heat from a light source assembly to a power supply in accordance with the invention. In the experiments depicted in these figures, the light source assembly included a single 5 Watt LED drawing 8.5 Watts of power from a power supply comprised of alkaline batteries (Duracell®, rated operating temperature range -4F to 130F). In those experiments that included a heat conductor, the heat conductor comprised a hollow aluminum rod having a 0.25-inch cross section. In one experiment, the rod was not insulated (blue). In another experiment, the rod was insulated (purple). Results for experiments that did not use a heat conductor are shown in green. In experiments that used a heat conductor, the rod extended into the power supply, between the batteries. Figure 4 graphs the results of the temperature over time of the heat sink of the light source assembly during each of three different experiments, two of which include a heat conductor and one of which does not. These results show that the operating Temperature of the heat sink is substantially reduced when a heat conductor is employed, slightly more so when the heat conductor is insulated in shrink-wrap plastic. Figure 5 plots other results of the experiments described in connection with Figure 4. specifically, the figure graphs battery output voltage over time, and shows that batteries that are not warmed by waste heat from the light source assembly exhibited a shorter life, measured in terms of output, as compared to configurations that employed a heat conductor to transfer heat from the light source assembly to the batteries. The results shown in Figures 4 and 5 demonstrate that battery half-life can be extended by transferring at least some of the waste heat generated by the LED to the power supply. Moreover, the temperature of the heat of the light source assembly was markedly reduced.

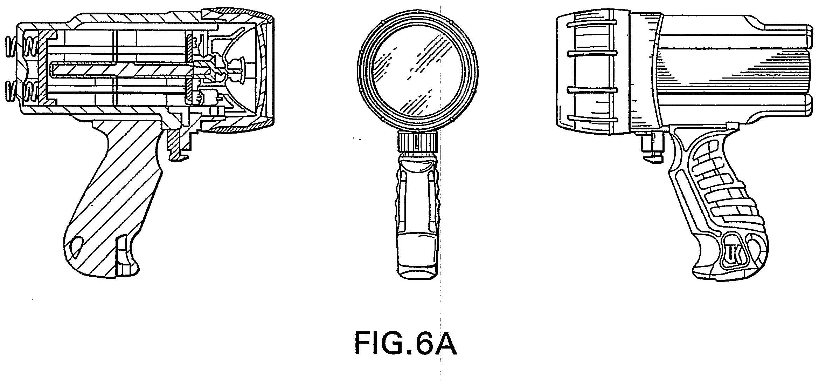

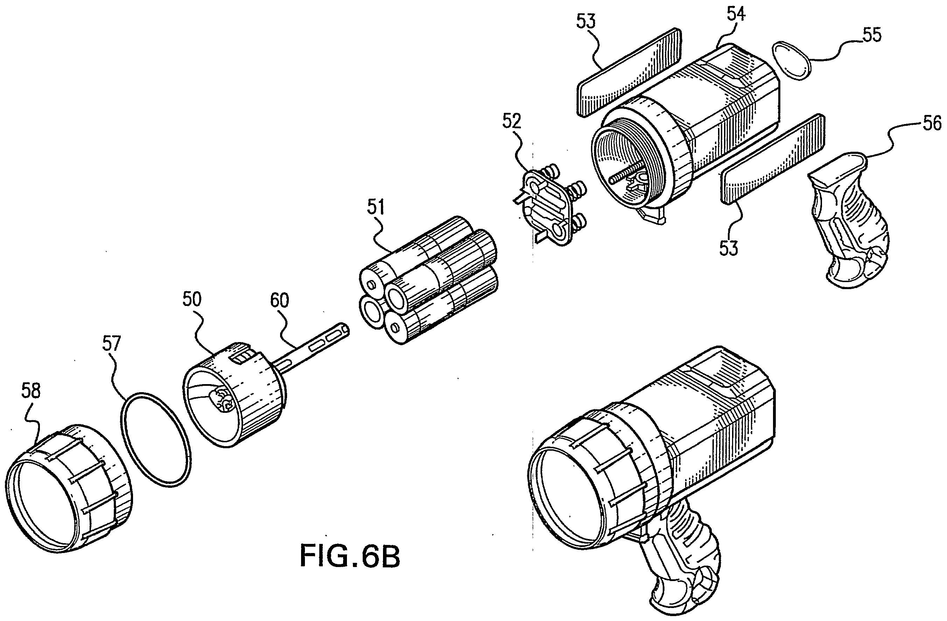

Figure 6 shows five views of a preferred flashlight embodiment of the invention. The exploded view shows the reflector module assembly (50), which contains a light source assembly (not shown) and an insulated heat conductor (60) and a power supply (51) that includes eight alkaline batteries and into the center of which the heat conductor (60) extends when the components are assembled into an operable flashlight. Also shown is a springloaded bottom plate assembly (52) that electrically engages the terminals of four of the batteries of the power supply (51), the flashlight housing (54), labels (53 and 54), a handle (56), an O-ring (57) and an over-molded bezel (58).

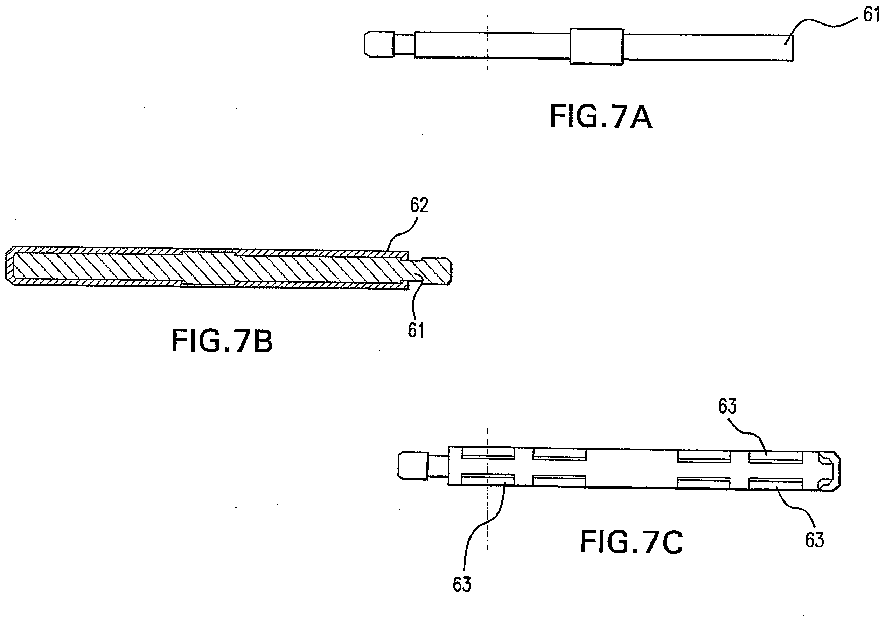

Figures 7A-C show the heat conductor (60) shown in Figure 6. Figure 7A shows the heat-conducting rod (61) of the heat conductor (60). Figure 7B shows the rod (60) over- molded with an insulating layer (62), and Figure 7C shows a longitudinal cross section of the insulated rod (60). As shown in Figure 7C, the insulating layer includes a number of spaced openings (63) to allow heat to be transferred from the rod to the batteries of the power supply.

### DETAILED DESCRIPTION

The present invention concerns battery-powered devices, namely flashlights capable of transferring waste heat generated during the operation of an electrical component, i.e., an energy consumption unit (i.e. a light source) of the device, to the battery or batteries of the device's power supply. This transfer of waste heat is accomplished by including a heat conductor adapted to transfer heat from the energy consumption unit to the power supply, preferably to the batteries themselves. It has surprisingly been discovered that by so transferring waste heat, battery life can be extended, efficiency of energy consumption units can be enhanced, energy use can be optimized, etc. Such devices, and
methods of making and using the same, are described in detail below.

### 1. Devices

The devices of the invention include at least one heat conduction circuit that comprises a battery-based power supply containing at least one battery, at least one energy consumption unit, and a heat conductor disposed in heat conducting relation between them. Any suitable battery, or combination of batteries, may be employed, and the particular configuration of the power supply will depend on the particular device. Each battery will have a positive and a negative terminal, and the batteries will be arrayed such that the terminals are in electrical communication with the energy consumption unit(s) of the device. For purposes of heat conduction, an energy consumption unit is coupled via a heat conductive material to the power supply containing the battery. During operation, a portion of the heat generated by the energy consumption unit is transferred to the battery or battery housing, thereby increasing the local temperature of the battery(ies).

Today, the most common battery cell chemistries are alkaline, nickel cadmium (NiCad), nickel-metal hydride (NiMH), lithium ion (Li-ion), and lithium-polymer (lipolymer). At low temperatures, battery performance is significantly diminished, although the amount by which performance is reduced at a given temperature varies based on the chemistry employed. For example, while -20°C (-4°F) is a threshold at which nickel-metal-hydride, sealed lead-acid, and lithium-ion batteries cease to function, nickel-cadmium batteries have been reported to function at temperatures as low as -40°C (-40°F), although with much reduced power output. Therefore, the efficient use of battery-driven devices at low temperatures has, until now, been problematic.

As already described, the devices of the invention include a power supply that comprises one or more batteries. When a device includes a power supply that includes two or more batteries, the batteries may be arranged side-by-side in two or more rows of batteries or as a single row of batteries. Other battery-powered devices employ similar battery arrangements, although in some cases such devices are configured to accept one, two, three, four, or more batteries aligned side-by-side. In still other embodiments, a single battery is used. In still other embodiments, a removable battery pack containing two or more batteries (frequently of the rechargeable variety) comprises the power supply for the device.

The batteries may be of any suitable shape, including cylindrical and non-cylindrical configurations. Batteries useful in various embodiments of the invention include AAA, AA, C, and D cell batteries, as well as dry cell and 9-volt batteries. Indeed, any suitable battery providing the desired energy requirements for can be employed a given device according to the invention.
In addition to batteries, a power supply may also comprise other components, including a battery housing or rack for retaining one or more batteries in the desired configuration. In such embodiments, the battery(ies) is(are) typically loaded into the battery housing or rack prior to insertion into the larger device. In other embodiments, the power supply may comprise a battery pack that comprises one or more batteries. It is preferred that batteries of a power supply be removable from the device. The power supply may also include one or more sensors, for example, a temperature sensor, for monitoring battery temperature. In some embodiments, temperature measurements taken from a sensor disposed in the power supply can be used to control whether the heat conductor of the device allows waste heat to flow from an energy consumption unit to the power supply at a particular time. For example, when the sensed temperature approaches the upper end of the operating range for the batteries of the particular power supply, the heat conduction circuit may be interrupted to prevent further flow of waste heat to the batteries. When the battery temperature drops to or below a preset threshold, the interruption may be discontinued, thereby allowing heat to again be transferred from the energy consumption unit to the power supply via the heat conductor. Thus, the invention includes a switch, be it one operated manually or controlled by a switching circuit under the control of a microprocessor onboard the device, disposed in the heat conduction circuit between the energy consumption unit and power supply.
To reduce the risk of battery damage and potential battery explosion, it is advantageous to configure a device according to the invention (i.e. a flashlight) to have battery polarization, meaning that completing an electrical circuit to energize an energy consumption unit (e.g., a light source) will only be possible if the one or more batteries of the power supply are inserted in the correct orientation. To provide battery polarization, the battery contact portion of the rear portion of the light source assembly can be configured to allow electrical contact with a standard positive terminal of a battery, but not with the negative terminal (or the converse). For example, if the central contact is recessed relative to a non-conductive or electrically isolated annular ring (or partial ring), the protrusion on the positive terminal of a standard battery for flashlight use (or other similar uses) can contact the central contact, but the flat negative terminal of the battery will only contact the non-conductive ring. Thus, if a battery is inserted with incorrect orientation, an electrical path will not be created between the battery and such a knuckle and light source assembly. For example, in designs using 2, 3, 4, 5, 6, 7, 8, 9, 10, 11, 12, or more batteries with one or two batteries in each battery row, this can be accomplished using suitable components at the ends of each row of batteries. That is, components can be shaped such that electrical contact will occur if the orientation of the adjacent battery is correct, but not if the orientation is reversed. As an example of how this can be accomplished, if electrical contact is to be made with the positive terminal of a conventional cylindrical battery (such as a C dry cell battery), a central contact is provided, at least partially surrounded by a non-conductive material that prevents electrical contact with the flat negative terminal of such batteries. Conversely, if contact with the negative terminal is intended, a contact ring or other non-central contact is provided that will contact the flat surface of the negative terminal, but with a central stand-off such that if the positive terminal is contacted, the central stand-off will bear against the protrusion of the positive terminal and hold the adjacent end of the terminal away from the electrical contact ring (or other electrical contact. Depending on the device, any suitable battery polarization construct can be utilized.

Heat transfer is accomplished using any suitable heat conductor adapted for the particular device and its configuration. Preferred heat conductors are metallic, in whole or in part. Preferably, a heat conductor makes direct physical contact with an energy consumption unit in order to ensure efficient waste heat transfer, although the use of high heat conduction materials (e.g., metallized gels and pastes) can be used to fill gaps and compensate for manufacturing and assembly flaws in the interfacing surfaces of the heat conductor and energy consumption unit. The region of the heat conductor that contacts, or is otherwise in intimate association with, an energy consumption unit, is termed the "proximal portion" of the conductor, while the region that contacts, or is otherwise in intimate association with, a battery is termed the "distal portion" of the conductor.

As with the proximal portion, it is preferred that the distal end of the conductor directly contact or otherwise be intimately associated with one or more batteries of the power supply so as to maximize heat transfer efficiency. Of course, the invention includes embodiments where the distal portion of the heat conductor does not contact a battery but instead dissipates heat to an adjacent one or more batteries by radiation or by heating of a gas or fluid in the power supply but external to the batteries. In preferred embodiments of this sort, the distal portion of heat conductor protrudes into the power supply so that it contacts or is otherwise positioned in heat conducting relation with one or more batteries of the power supply. An example of one such embodiment is depicted in Figure 4.

The heat conductor may be a solid piece of material, or it may be hollow or filled with a heat conducting fluid. Some or all of the conductor may be coated with another material, for example, a heat-shrinkable plastic, particularly to cover exterior surfaces of the heat conductor that are not intended for absorbing heat from an energy consumption unit or transferring it to the power supply. In such embodiments, the coating material is preferably a thermally insulating material, thus facilitating retention of heat in the heat conductor as heat energy flows from the energy consumption unit to the power supply.

As will be appreciated, the heat conduction system of a device according to the invention may further include heat conductors to transfer energy consumption unit waste heat to other portions of the device in addition to, or in lieu of, the power supply, particularly when the power supply temperature (particularly battery temperature) reaches the upper part of its normal operating range, in order to avoid battery overheating. Heat conducting circuits (and the electronics needed to control and operate such circuitry, e.g., microprocessors, temperature sensors, relays, servos, etc.) capable of performing such functions can readily be assembled by those in the art in view of this specification.

In addition to a power supply, a heat conductor, and an energy consumption unit, a device according to the invention also typically comprises a housing and such other components and as are necessary to provide the desired device functionality. For example, a portable music player will contain a storage device, typically a small computer hard drive, for storage and retrieval of music and other digital media, as well as an appropriately configured microprocessor and associated memory devices, user interfaces (e.g., switches to turn the device on/off, control volume, song selection, etc.), and jacks and associated circuitry for outputting music to a pair of speakers or earphones worn by a user of the device. The details of these and other electronic devices that may be adapted to include one or more heat conduction circuits according to the invention are well known in the art, and need not be described here.

A particularly preferred class of devices of the invention is flashlights. See, e.g., co-owned U.S. patent numbers 5,904,414, 4,985,812, and 4,870,550 and U.S. patent application serial numbers 10/638,123 and 10/678,037 for detailed descriptions of various flashlights that can readily be adapted to include a heat conduction circuit according to the invention for the purpose of transferring waste heat from the light source to the power supply.

Flashlights are often used in low temperature settings, e.g., underwater, at night, in cold climates, etc. Therefore, the batteries used to power the light source(s) of a flashlight used under such conditions typically display attenuated life spans and reduced efficiency. The ability to warm the battery (or batteries) under such conditions can mitigate problems associated with low temperature use. Increasing battery efficiency has numerous benefits, including extended use time, particularly in low ambient temperatures, and decreasing both waste products and utilization resources associated with battery disposal. Also, removing waste heat from energy consumption units can serve to enhance the lifetime of such components by lowering operating temperature.

Thus, among the various embodiments of the invention are those that concern battery-powered flashlights. Such flashlights include those of any suitable design, size, light output, etc. In preferred embodiments, a flashlight includes a battery housing having a front end and a rear end. Preferably, an illumination head is attached to the front end of the battery housing. The head typically includes a bezel and a light source assembly that can be electrically connected to the battery-based power supply. The light source assembly also includes electrical connections for providing electrical power from the batteries of the power supply to the light source(s) in the light source assembly.

Certain preferred embodiments concern flashlights wherein the illumination head is a rotating head that contains the light source assembly. Preferably, the rotatable head (rotatable with respect to the battery housing about the long axis) is replaceably removable. In other preferred embodiments, the head to configured such that the light source assembly projects light at an angle, including up to and even beyond a right angle to the long axis of the battery case. The angle may be fixed or adjustable, and such a head may also be a rotatable head. If desired, such an angled head can be replaced with a straight head.

Further, in particular embodiments, the head is threaded onto the housing at a housing connection. The threading the head onto the housing with a full set of batteries in the housing establishes electrical contact between the batteries and the light source assembly. When multiple rows of batteries are employed, systems can be used inside the housing to enable each row of one or more batteries to make the necessary electrical contact to participate in energizing the light source(s), when desired. See, for example, U.S. patent application serial number 10/638,123. Typical flashlight battery configurations include one row of two, three, four or more cylindrical batteries; two, three, or four or more rows of two, three, or four or more cylindrical batteries; three batteries arrayed in two rows, two in one row and one in the second row; and one large dry cell battery.

A "bezel" refers to a flashlight component that includes a lens. A bezel can be adapted to attach to either the battery housing or an end of an intervening piece head (e.g., a angled head piece that provides for casting light at an angle to the longitudinal axis of the battery housing), depending on the particular embodiment and desire of the user.

A "battery housing" refers to a component that contains the one or more batteries of the power supply of the device. As will be appreciated, in some embodiments, the battery housing is integral with the housing of the device, such that there is no battery housing or carrier that may be physically separated from the other parts of the device. The battery housing typically includes an opening for inserting the batteries. In many embodiments, the opening for inserting the battery(ies) is the same opening at which the light source assembly is attached to the housing.

A "battery polarizer" refers to a component or combination of components in a battery-powered device, such as a flashlight, that prevents the device from being energized by the batteries unless the batteries are inserted with correct orientation. Generally, the components are configured such that electrical contact will not be established unless each of the one or more batteries is inserted in correct orientation.

A "replaceable attachment" and the like refer the ability to repeatedly remove and replace to a component of device (e.g., a the head of a flashlight), preferably without the need for a tool. For example, a replaceable attachment of a flashlight head means that the head can be repeatedly removed and replaced from the battery housing. If the device (e.g., a flashlight) is functional before such removal and replacement, the replacement returns the device to a functional state.

A "rotatable" flashlight head refers to a head that, when installed on a flashlight battery housing, can be rotated relative to the battery housing about a central axis passing through the connection between the head and battery housing and through the length of the battery housing, and that the rotation can be repeatedly performed in use of the flashlight. The rotation can occur over any degree of rotation, preferably at least about 60, 120, 180, 270, 360 degrees of rotation or even more. In cases where the head screws onto the housing, the rotation can also occur at the threaded connection.

Flashlights can also include other features, which can be utilized singly or in any combination. These include, for example, impact resistance, waterproofing, and gas venting.

Housings for devices of the invention, including flashlights, can be formed from any suitable material. Preferred materials include metal or plastic, and are shaped using conventional processes, such as molding or stamping processes. Particularly preferred are battery housings formed of moldable plastic of a type that provides good impact resistance, such as high-density polyethylene or polypropylene. The housing may also provide for thennal insulation of the components inside the housing from the environment outside of the housing. If desired, an additional insulating layer or article may be placed around the outside of some or all of the housing to provide additional insulation.
The housing can be formed in a single piece, or of multiple pieces that are then joined.
For example, the housing could be formed in two symmetrical pieces and then joined along the centerline. Likewise, the rear end of the housing can be formed integrally or as a separate piece, e.g., as an end cap. In some embodiments, such an end cap can be sealed to the main housing body, e.g., by gluing or welding. In other embodiments, the end cap may be removable. For example, the end cap may be threaded such that it can screwed into or onto the main body of the housing. Alternatively, it may be attached to the main body via a hinge, which allows the housing to be opened. A separate end cap design can be advantageous to allow easier assembly of other components of the device, e.g., a pivot contact and/or gas vent in the housing.
For a device (i.e. a flashlight) configured for side-by-side batteries, the housing is
adapted to accept such a configuration. As a result, typically the housing will typically be elongated and generally oval or rectangular in transverse cross-section, of sufficient size to accept two (or more) side-by-side rows of batteries to be inserted. In preferred flashlight embodiments, the housing can be configured with a round opening at the front to which the bezel attaches and through which batteries can be inserted and removed. The back end is closed. In other embodiments, the rear end opens, or both the front end and rear end open. Flashlights with generally cylindrical housings can be configured as is typical for such flashlight shapes such that one or more batteries (e.g., 1, 2, 3, or 4) are inserted in-line within the hollow cvlinder.
Flashlight bezels are typically formed of plastic or metal, and are frequently threaded
for attachment to a complementary threaded portion on a battery housing or the knuckle portion of an angled head. Preferably, the bezel forms a waterproof seal with the housing. Such a seal can be provided by, for example, an 0-ring that fits in an annular channel in the housing, preferably behind a threaded portion of the housing that mates with the bezel.
As with many flashlights, the bezel holds a light source assembly that hold or is adapted to hold one or more light sources, e.g., a LED or light bulb. For the present invention, preferably the battery-contacting portion of the light source assembly (if the flashlight does not include a knuckle of other intervening component disposed between the power supply and light source assembly) is configured to contribute to battery polarization. Generally the positive terminal of a battery bears against a contact (which may, for example, be a contact of a light bulb) of the light source assembly

### 2. Applications

Devices, namely flashlights according to the invention are intended to operate more efficiently, particularly in low temperature environments. Through the use of a heat conduction circuit, waste heat may be transferred from an energy consumption unit to the power supply, either continuously or intermittently, depending on the configuration of the particular device. Heat transfer not only promotes improved battery efficiency, it can also improve the efficiency of the particular energy consumption unit. For example, reducing the operating temperature of
an LED light source improves LED efficiency. As a result, more light may be output at a given energy level. Alternatively, modulating the light output of the LED to deliver no more than a desired amount of light can be used to further extend battery life. Electronics for the control of light source intensity may thus also be included in a device according to the invention, if desired.

All of the devices and methods disclosed and claimed herein can be made and
executed without undue experimentation in light of the present description. While the compositions and methods of this invention have been described in terms of preferred embodiments, it will be apparent to those of skill in the art that variations may be applied to the devices and methods and in the steps or in the sequence of steps of the methods described herein without departing from the scope of the invention. In addition, those in the art will appreciate that devices according to the invention may include one or additional components to provide additional functionality. All such adapted devices and modifications apparent to those skilled in the art
are deemed to be within the scope of the invention as defined by the appended claims.
The invention illustratively described herein suitably may be practiced in the absence of any element(s) not specifically disclosed herein. Thus, for example, in each instance herein any of the terms "comprising", "consisting essentially of, and "consisting of may be replaced with either of the other two terms. The terms and expressions which have been employed are used as terms of description and not of limitation, and there is no intention that in the use of such terms and expressions of excluding any equivalents of the features shown and described or portions thereof, but it is recognized that various modifications are possible within the scope of the invention claimed.
Thus, it should be understood that although the present invention has been specifically disclosed by preferred embodiments and optional features, modification and variation of the concepts herein disclosed may be resorted to by those skilled in the art, and that such modifications and variations are considered to be within the scope of this invention as defined by the appended claims.

## Claims

1. A flashlight configured to improve operation of a battery-based power supply, comprising:
a. a housing (4);
b. a light source (100, 8) in electrical communication with a power supply (102) disposed in the housing (4), wherein the power supply (102) comprises at least one battery (1a, 1b, 1c), wherein the power supply includes one or more temperature sensors for monitoring battery temperature; and
c. a heat conduction circuit, comprising the battery-based power supply (102), the light source (100, 8) and a heat conductor (101, 2), the heat conductor (101,2) disposed in the housing (4) in heat conducting relation with the light source (100, 8) and the power supply (102, 1a, 1b, 1c) such that during operation of the light source (100, 8) at least a portion of heat generated by the light source (100, 8) is conducted by the heat conductor (101, 2) to the battery (1a, 1b, 1c) to improve operation of the battery-based power supply, wherein a switch, operated manually or controlled by a switching circuit under control of a microprocessor onboard the flashlight is disposed in the heat conductor between the light source (100, 8) and the power supply (102) to interrupt the heat conduction circuit when the temperature sensor measures a battery temperature above a certain value.

2. A flashlight according to claim 1 wherein the light source is selected from the group consisting of a light bulb (8) and an LED.

3. A flashlight according to any of claims 1 to 2 wherein the heat conductor (101, 2) comprises metal.

4. A flashlight according to any of claims 1 to 3 wherein the metal is selected from the group consisting of silver, copper, gold, aluminum, iron, platinum, and an alloy of any of the foregoing.

5. A flashlight according to any of claims 1 to 4 wherein some or all of the heat conductor (101, 2) is coated with a thermally insulating material.

## Patentansprüche

1. Eine Taschenlampe, konfiguriert, um den Betrieb einer batterie-basierten Stromversorgung zu verbessern, umfassend:
a. ein Gehäuse (4);
b. eine Lichtquelle (100, 8) in elektrischer Kommunikation mit einer Stromversorgung (102) angeordnet in dem Gehäuse (4), wobei die Stromversorgung (102) zumindest eine Batterie (1a, 1b, 1c) umfasst, wobei die Stromversorgung einen oder mehrere Temperatursensoren zur Überwachung der Batterietemperatur umfasst; und
c. einen Wärmeleitungskreis, umfassend die batterie-basierte Stromversorgung (102), die Lichtquelle (100, 8) und einen Wärmeleiter (101,2), der Wärmeleiter (101,2) angeordnet in dem Gehäuse (4) in Wärmeleitungsbeziehung mit der Lichtquelle (100, 8) und der Stromversorgung (102, 1a, 1b, 1c), so dass während des Betriebs der Lichtquelle (100, 8) zumindest ein Teil von Wärme, die von der Lichtquelle (100, 8) erzeugt wird, von dem Wärmeleiter (101, 2) zu der Batterie (1a, 1b, 1c) geleitet wird, um den Betrieb der batterie-basierten Stromversorgung zu verbessern, wobei ein Schalter, manuell bedient oder gesteuert von einem Schaltkreis unter Steuerung eines Mikroprozessors in der Taschenlampe, in dem Wärmeleiter zwischen der Lichtquelle (100, 8) und der Stromversorgung (102) angeordnet ist, um den Wärmeleitungskreis zu unterbrechen, wenn der Temperatursensor eine Batterietemperatur über einem bestimmtem Wert misst.

2. Eine Taschenlampe nach Anspruch 1, wobei die Lichtquelle ausgewählt ist aus der Gruppe bestehend aus einer Glühlampe (8) und einer LED.

3. Eine Taschenlampe nach einem der Ansprüche 1 bis 2, wobei der Wärmeleiter (101, 2) Metall umfasst.

4. Eine Taschenlampe nach einem der Ansprüche 1 bis 3, wobei das Metall ausgewählt ist aus der Gruppe bestehend aus Silber, Kupfer, Gold, Aluminium, Platin und irgendeiner Legierung aus dem Vorgenannten.

5. Eine Taschenlampe nach einem der Ansprüche 1 bis 4, wobei ein Teil oder alles des Wärmeleiters (101, 2) mit einem thermisch isolierenden Material beschichtet ist.

## Revendications

1. Lampe torche configurée pour améliorer le fonctionnement d'une alimentation basée sur des piles, comprenant :
a. un boîtier (4) ;
b. une source de lumière (100, 8) en communication électrique avec une alimentation électrique (102) placée dans le boîtier (4), dans laquelle l'alimentation électrique (102) comprend au moins une pile (1a, 1b, 1c), l'alimentation électrique comprenant un ou plusieurs capteur(s) de température pour surveiller une température de pile ; et
c. un circuit de conduction de chaleur, comprenant l'alimentation basée sur des piles (102), la source de lumière (100, 8) et un conducteur de chaleur (101, 2), le conducteur de chaleur (101, 2) étant placé dans le boîtier (4) en relation de conduction de chaleur avec la source de lumière (100, 8) et l'alimentation électrique (102, 1a, 1b, 1c) de sorte que pendant le fonctionnement de la source de lumière (100, 8), au moins une partie de la chaleur produite par la source de lumière (100, 8) est conduite par le conducteur de chaleur (101, 2) jusqu'à la pile (1a, 1b, 1c) pour améliorer le fonctionnement de l'alimentation basée sur des piles, dans laquelle un interrupteur, actionné manuellement ou commandé par un circuit de commutation sous le contrôle d'un microprocesseur embarqué dans la lampe torche est placé dans le conducteur de chaleur, entre la source de lumière (100, 8) et l'alimentation électrique (102) pour interrompre le circuit de conduction de chaleur quand le capteur de température mesure une température de pile supérieure à une certaine valeur.

2. Lampe torche selon la revendication 1, dans laquelle la source de lumière est choisie dans l'ensemble comprenant une ampoule (8) et une diode électroluminescente.

3. Lampe torche selon l'une quelconque des revendications 1 à 2, dans laquelle le conducteur de chaleur (101, 2) comprend du métal.

4. Lampe torche selon l'une quelconque des revendications 1 à 3, dans laquelle le métal est choisi dans l'ensemble comprenant l'argent, le cuivre, l'or, l'aluminium, le fer, le platine et un alliage quelconque des éléments qui précèdent.

5. Lampe torche selon l'une quelconque des revendications 1 à 4, dans laquelle une partie ou la totalité du conducteur de chaleur (101, 2) est revêtue d'un matériau thermiquement isolant.
